Europäisches Patentamt

European Patent Office

Office européen des brevets

(11) Publication number: **0 417 824 A1**

## EUROPEAN PATENT APPLICATION

(21) Application number: 90202240.9

(22) Date of filing: 21.08.90

(51) Int. Cl.⁵: **C08G 18/83**, C08G 18/10, C08K 5/10, C08L 75/12, C08L 75/02, C09D 175/12, C09D 175/02

(30) Priority: 24.08.89 NL 8902135

(43) Date of publication of application:
20.03.91 Bulletin 91/12

(84) Designated Contracting States:
AT BE CH DE DK ES FR GB IT LI NL SE

(71) Applicant: STAMICARBON B.V.
Mijnweg 1
NL-6167 AC Geleen(NL)

(72) Inventor: Wories, Herman Jelle
Romulushof 43
NL-6215 EJ Maastricht(NL)
Inventor: Van den Elshout, Wilhelmus
Henricus H. A.
Walramstraat 128-18
NL-6131 BP Sittard(NL)
Inventor: van den Boom, Henricus Petrus A.
J.M.
Rudigerstraat 29
NL-5408 AA Uden(NL)
Inventor: Molhoek, Leendert Jan
Jos Lussenburglaan 17
NL-8072 HV Nunspeet(NL)

(54) Resin composition comprising a polymer containing primary amine functional or blocked primary amine functional urethane and/or urea groups and a cross-linking agent.

(57) The invention relates to a resin composition based on a polymer containing primary amine functional or primary blocked amine functional urethane and/or urea groups and on a cross-linking agent.
As cross-linking agent use is made of a low molecular weight polyacetoacetate.

EP 0 417 824 A1

Xerox Copy Centre

# RESIN COMPOSITION COMPRISING A POLYMER CONTAINING PRIMARY AMINE FUNCTIONAL OR BLOCKED PRIMARY AMINE FUNCTIONAL URETHANE AND/OR UREA GROUPS AND A CROSS-LINKING AGENT

The present invention relates to a resin composition comprising a polymer containing primary amine functional or blocked primary amine functional urethane and/or urea groups and a cross-linking agent.

Resin compositions comprising polymers containing amine functional urethane and/or urea groups are known in the art. As cross-linking agent usually a isocyanate-containing compound is applied (see, for instance, Advances in Urethane Science and Technology, edited by Kurt Frisch, Volume 10, p. 148). At temperatures between $0°C$ and $100°C$ such isocyanate compounds, in combination with the above-mentioned polymers, result in excellent curing of the coating. However, these isocyanates are undesirable, on the one hand because of side reactions, for instance induced by atmospheric moisture, and on the other because of the undesirable toxic properties of these compounds.

The invention is characterized in that a low molecular weight polyacetoacetate is used as cross-linking agent.

Thus it is achieved that resin compositions comprising a polymer containing primary amine functional or blocked primary amine functional urethane and/or urea groups are obtained in the absence of an isocyanate compound as cross-linking agent. The resin compositions according to the invention are used as binders in a coating curing at temperatures between $0°C$ and $100°C$, and preferably curing at room temperature.

EP-A-264983 describes a coating on the basis of a polyaminoamide resin and a polyacetoacetate. Such coatings, however, have the disadvantage that they yellow rapidly, while their durability outdoors is insufficient.

By preference the low molecular weight polyacetoacetate is a compound on the basis of an acetoacetate and a polyhydroxy functional monomer or oligomer.

The low molecular weight polyacetoacetate has a theoretical molecular weight of between 200 and 1000. The average acetoacetate functionality of the crosslinking agent is usually between 1.5 and 6, preferably between 2 and 4. The polyacetoacetate generally is a liquid, with a viscosity ranging from 0.1 dPa.s to 100 dPa.s (measured at 25 °C), which is highly suitable for processing.

The low molecular weight polyacetoacetate can be obtained by transesterification of an acetoacetate and a polyhydroxy functional monomer or oligomer.

Examples of acetoacetates that can be used include methyl acetoacetate, ethyl acetoacetate, isopropyl acetoacetate, butyl acetoacetate, t-butyl acetoacetate, methylbenzyl acetoacetate and/or dodecyl acetoacetate.

The polyhydroxy functional monomers or oligomers that can be used include trimethylol propane, trimethylol ethane, cyclohexane dimethanol, 1,6-hexane diol, hexane-2,5-diol, neopentyl glycol, ethylene glycol, diethylene glycol, propylene glycol, 1,2-butane diol, 1,3-butane diol, 1,4-butane diol, (di)sorbitol, (di)pentaerythritol, tris hydroxy ethyl isocyanurate and/or glycerol. Trimethylol propane, (di)pentaerythritol and/or 1,4-butane diol are preferably used as polyhydroxy functional monomer.

The transesterification can be effected at temperatures between $60°C$ and $240°C$, preferably between $80°C$ and $170°C$, for instance in a nitrogen atmosphere, both in the absence and in the presence of a catalyst, in the latter case either a basic one, such as dibutyltinoxide, or an acid one, such as paratoluene sulphonic acid. The molar ratio between acetoacetate and polyhydroxy functional monomer or oligomer is between 1.5 : 1 and 15 : 1, preferably between 2.5 : 1 and 7.5 : 1.

An excellent cross-linking agent is obtained, for instance, by transesterification of methyl acetoacetate or ethyl acetoacetate with trimethylol propane, which yields a mixture of trimethyl propane - mono-/di-/triacetoacetate that can be used as the cross-linking agent.

The low molecular weight polyacetoacetates can also be obtained by reacting a diketene with a polyhydroxy functional monomer or oligomer as described above.

Suitable polymers containing primary amine functional or blocked primary amine functional urethane and/or urea groups can be obtained using customary methods.

These polymers may be based on amines such as ethylene diamine, propylene diamine, ethanol amine, propanol amine, butylene diamine, pentamethylene diamine, hexamethylene diamine, decamethylene diamine, 4,7-dioxadecane-1,10-diamine, dodeca-methylene diamine, 4,9-dioxadodecane-1,12-diamine, 7-methyl-4,10-dioxatridecane-1,13-diamine, 1,2-diaminocyclohexane, 1,4-diaminocyclohexane, 4,4'-diaminodicyclohexyl methane, isophorone diamine, bis-(3-methyl-4-aminocyclohexyl) methane, 2,2-bis-(4-aminocyclohexyl) propane, nitrile tris (ethane amine), polyether polyamine, bis-(3-aminopropyl) methyl amine, 3-amino-1-(methyl amine) propane, 3-amino-1-(cyclohexyl amino) propane and N-(2-hydroxy ethyl) ethylene diamine.

Examples of polyols which can be used in the polymers include trimethylol propane, trimethylol ethane, cyclohexane dimethanol, 1,6-hexane diol, hexane-2,5-diol, neopentyl glycol, ethylene glycol, diethylene glycol, propylene glycol, 1,2-butane diol, 1,3-butane diol, 1,4-butane diol, (di)sorbitol, (di)pentaerythritol, tris hydroxy ethyl isocyanurate, glycerol, polypropylene glycol, polyethylene glycol and polytetrahydrofuran.

Examples of isocyanates which can be used for the polymers include the known aliphatic, cycloaliphatic and aromatic di-, tri- and tetraisocyanates, including 1,5-naphthalene diisocyanate, 4,4'-diphenyl methane diisocyanate, 4,4'-diphenyl dimethyl methane diisocyanate, di- and tetraalkyl diphenyl methane diisocyanate, 4,4'-dibenzyl diisocyanate, 1,3-phenylene diisocyanate, 1,4-phenylene diisocyanate, isomers of toluene diisocyanate, 1-methyl 2,4-diisocyanate cyclohexane, 1,6-diisocyanate-2,4,4-trimethyl hexane, 1,6-diisocyanate-2,4,4-trimethyl hexane, 1-isocyanate methyl 3-isocyanate 1,5,5,-trimethyl cyclohexane, chlorinated and brominated diisocyanates, phosphorus-containing diisocyanates, 4,4'-diisocyanate phenyl perfluoro ethane, tetramethoxy 1,4'-diisocyanate, butane 1,4-diisocyanate, hexane-1,5-diisocyanate, hexane 1,6-diisocyanate, dicyclohexyl methane diisocyanate, cyclohexane 1,4-diisocyanate, ethylene diisocyanate, phthalic acid-bis-isocyanate ethyl ester, 1-chloromethyl phenyl 2,4-diisocyanate, 1-bromomethyl phenyl 2,6-diisocyanate, 3,3-bis-chloromethyl ether 4,4'-diphenyl diisocyanate and adducts containing isocyanate groups.

The polymers may be dissolved in solvents which are customarily used in the paint industry, for example toluene, xylene, ketones, butyl acetate and glycol ethers. The polymers may also be dispersed in water.

The amine functionality may be blocked by a ketone or an aldehyde, for example acetaldehyde, propionic aldehyde, butyraldehyde, benzaldehyde, acetone, methyl ethyl ketone, amyl ketone, isoamyl ketone, methyl isobutyl ketone, cyclohexanone and cyclopentanone.

The resin composition according to the invention is obtained by mixing a polymer containing primary amine functional or blocked primary amine functional urethane and/or urea groups with a low molecular weight polyacetoacetate. The amount of polyacetoacetate used ranges from 2-50, preferably 5-15, % by weight, while the amount of polymer used is 50-98, preferably 85-95, % by weight. Mixing preferably takes place at a temperature between 15°C and 30°C.

The present invention is also directed to two-component systems comprising a polymer containing primary amine functional or blocked primary amine functional urethane and/or urea groups as the first component and a low molecular weight polyacetoacetate as the second component.

The resin composition according to the invention can be mixed with customary additives to obtain coatings. Examples of additives include pigments, dyestuffs, fillers, thickeners, levelling agents, flatting agents, stabilizers and/or siccatives. Suitable substrates include glass, metal, wood and plastic. The resin composition can also be used in adhesive compositions.

The invention will be elucidated on the basis of the following non-limiting examples.

Examples

Example I

Preparation of an urethane polymer with isocyanate end groups

840 parts by weight of polypropylene glycol (PPG 420) and 666 parts by weight of isophorone diisocyanate (IDPI) and 376 parts by weight of ethyl acetate were first heated to 80°C, following which they were reacted for 4 hours before being cooled to 50°C. Subsequently 2 parts by weight of dibutyl tin dilaurate (DBTDL) were added, and the temperature was raised to 80°C. After 1 hour's post-reacting a (linear) isocyanate-terminated polyurethane was obtained.

Example II

Preparation of an urethane polymer with isocyanate endgroups :

60 parts by weight of 1,6-hexanediol, 95 parts by weight of trimethylolpropane, 778 parts by weight isophorone diisocyanate and 600 parts by weight of butylacetate were first heated to 80° C, following which they were reacted for 4 hours before being cooled to 50° C. Subsequently 1 part by weight of dibutyl tin dilaurate (DBTDL) was added, and the temperature was raised to 80° C. After 1 hour's post-reacting a (linear) isocyanate-terminated polyurethane was obtained.

Example III

Preparation of an urethane polymer with isocyanate end groups

500 parts by weight of polypropylene glycol (PPG 420), 240 parts by weight of 1,1-isopropylidene-bis-(p-phenylene-oxy) diethanol-2 (Dianol 2,2), 44,7 parts by weight of trimethylol propane and 777 parts by weight of IDPI were first heated to 80° C in 400 parts by weight of ethyl acetate, and then cooled to 50° C. Subsequently 1 part by weight of DBTDL was added and the temperature was raised to 80° C. A (branched) isocyanate-terminated polyurethane was obtained.

Example IV

Preparation of an amine functional urethane polymer

At 40° C 600 parts by weight of the polymer obtained in Example I were added to a mixture consisting of 140 parts by weight of isophorone diamine (IDPA) and 300 parts by weight of methyl isobutyl ketone (MIBK).
The resulting product is characterized as follows:
- colour 1 (Gardner)
- viscosity: 15 Pa.s (23° C, Emila)
- amine number: 61 mg KOH/gramme
- solids content: 60%.

Example V

Preparation of an amine functional urethane polymer

A mixture consisting of 90 parts by weight of IDPA and 265 parts by weight of MIBK was heated to 35° C. To this mixture 302 parts by weight of the polymer obtained in Example III were added. The temperature was kept below 45° C.
The resulting product is characterized as follows:
- colour < 1 (Gardner)
- amine number: 49 mg kOH/gramme
- solids content: 57%.

Example VI

Preparation of a ketimine functional urethane polymer

A mixture consisting of 100 parts by weight of butylacetate and 300 parts by weight of the polymer obtained in Example II were mixed at 20° C. Next during 30 minutes 90 parts by weight of the ketimine of 3-amino-1-methylaminopropane were added at a temperature below 40° C.
The resulting product is characterized as follows:
- colour < 1 (Gardner)
- amine number: 56 mg kOH/gramme

4

- solids content: 56%

Example VII

Preparation of trimethylol propane triacetoacetate (TMPTAA)

135 parts by weight of trimethylol propane (TMP) and 464 parts by weight of methyl acetoacetate were mixed and heated to 120° C and then heated to 160° C for 3-4 hours with the methanol formed being distilled off. Upon completion of the trans-esterification, the mixture was cooled to 80° C. Subsequently, the mixture was vacuumized and slowly heated to 150° C with all volatile components being distilled off.

Example VIII

Preparation of butane diol diacetoacetate (BDDAA)

180 parts by weight 1,4-butane diol and 700 parts by weight tertiary butyl acetoacetate were mixed and heated to 100° C. The reaction started with the tertiary butanol formed being distilled off. The reaction mixture was heated to 150° C. Upon completion of the reaction, the mixture was cooled to 50° C. Subsequently, the mixture was vacuumized and slowly heated to 150° C with all volatile components being destilled off.

Examples XI-XII and Comparative Examples A-B

Coating preparation

The polymer and the crosslinking agent described in Table 1 below were mixed in equimolar ratio for half an hour at room temperature (see Table 1). The mixtures obtained were applied to glass using an applicator with the thickness of the wet layer being 50 μm.

Table 1

|  | Polymer | Cross-linking agent | Mixture |
|---|---|---|---|
| Example XI | 27 parts (wt.) polymer of Example IV | 6 parts (wt.) TMPTAA of Example VII | IX |
| Example A | 27 parts (wt.) polymer of Example IV | 6.8 parts (wt.) Desmodur N * | A |
| Example X | 30 parts (wt.) polymer of Example V | 6 parts (wt.) TMPTAA of Example VII | X |
| Example B | 30 parts (wt.) polymer of Example V | 7 parts (wt.) Desmodur N * | B |
| Example XI | 28 parts (wt.) polymer of Example VI | 4 parts (wt) TMPTAA of Example VII | XI |
| Example XII | 31 parts (wt) polymer of Example VI | 4 parts (wt) BDDAA of Example VIII | XII |

* Desmodur N (Bayer AG) is an isocyanate-containing compound.

After 4 days the hardness (according to König, DIN 53517) and the chemical resistance (using a butyl acetate/ethyl acetate mixture) of the above mixtures were determined.

| Mixture | Hardness | Chemical resistance |
|---------|----------|---------------------|
| IX | 60 | 5* |
| A | 86 | 5* |
| X | 107 | 5* |
| B | 122 | 5* |
| XI | 205 | 5* |
| XII | 186 | 5* |

* 5 = very good

These examples show that the use of TMPTAA and BDDAA as cross-linking agent instead of the use of an isocyanate-containing compound results in good products.

## Claims

1. Resin composition comprising a polymer containing primary amine functional or blocked primary amine functional urethane and/or urea groups and on a cross-linking agent, characterized in that a low molecular weight polyacetoacetate is used as the cross-linking agent.

2. Resin composition according to claim 1, characterized in that the low molecular weight polyacetoacetate is a compound formed by the reaction of an acetoacetate and a polyhydroxy functional monomer or oligomer.

3. Resin composition according to any of claims 1-2, characterized in that the polyacetoacetate has a molecular weight of between 200 and 1000.

4. Resin composition according to claim 2, characterized in that the polyhydroxy functional monomer or oligomer is trimethylol propane, (di)pentaerythritol and/or 1,4-butane diol.

5. Process for the preparation of a resin composition according to any one of claims 1-4, characterized in that 2-50 % by weight of the polyacetoacetate and 50-98 % by weight of the polymer are mixed at a temperature between 15° C and 30° C.

6. Use of a resin composition according to any one of claims 1-3 or of a resin composition obtained by the process according to claim 5.

7. Coating composition comprising the resin composition according to any one of claims 1-4 or a resin composition obtained by the process according to claim 5.

8. Coating composition curable at room temperature, comprising the resin composition according to any one of claims 1-4 or a resin composition obtained by the process according to claim 5.

9. Two-component system comprising a polymer containing primary amine functional or blocked primary amine functional urethane and/or urea groups as first component and a low molecular weight polyacetoacetate as second component.

10. Coated substrate that can be obtained by coating a substrate with a resin composition according to any one of claims 1-4, by coating a substrate with a resin composition obtained by the process according to claim 5, or using a composition according to any one of claims 7-9.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
| --- | --- | --- | --- |
| A | US-A-4 127 516 (D.W. LARSEN et al.) ----- | | C 08 G 18/83 C 08 G 18/10 C 08 K 5/10 C 08 L 75/12 C 08 L 75/02 C 09 D 175/12 C 09 D 175/02 |

**TECHNICAL FIELDS SEARCHED (Int. Cl.5)**

C 08 G
C 08 K
C 08 J
C 09 D

The present search report has been drawn up for all claims

| Place of search | Date of completion of search | Examiner |
| --- | --- | --- |
| The Hague | 19 December 90 | VAN PUYMBROECK M.A. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document